# EUROPÄISCHE PATENTSCHRIFT

(11) **EP 3 703 482 B1**
(45) Veröffentlichungstag und Bekanntmachung des Hinweises auf die Patenterteilung: **24.11.2021**
(21) Anmeldenummer: 18804237.8
(22) Anmeldetag: 26.10.2018
(51) Int. Cl.: A01D 33/08, A01F 12/48

(54) **TRENNVORRICHTUNG**
SEPARATING DEVICE
DISPOSITIF DE SÉPARATION

(30) Priorität: 01.11.2017 DE 102017125561
(43) Veröffentlichungstag der Anmeldung: 09.09.2020
(73) Patentinhaber: Grimme Landmaschinenfabrik GmbH & Co. KG, 49401 Damme (DE)
(72) Erfinder: PÖHLKING, Alfons, 49439 Steinfeld (DE); DETTMER, Franz-Josef, 49577 Ankum (DE)
(74) Vertreter: Wischmeyer, André
(86) Internationale Anmeldenummer: PCT/EP2018/079493
(87) Internationale Veröffentlichungsnummer: WO 2019/086354

(56) Entgegenhaltungen:
- EP-A1- 0 212 151
- DE-C- 908 808
- DE-C- 928 017
- US-A- 3 227 276

## Beschreibung

Die Erfindung betrifft eine Trennvorrichtung zur Trennung eines Erntegemisches von Hackfrüchten und Beimengungen. Die Trennvorrichtung umfasst wenigstens ein im Betrieb umlaufendes und als Förderband ausgebildetes Förderelement, das zumindest zur Zuführung des Erntegemisches zu einem Trennbereich oder zur Abführung der Hackfrüchte vom Trennbereich dient. Das Förderelement fördert dabei in eine Förderrichtung. Weiterhin umfasst die Trennvorrichtung zumindest einen Fluidstromerzeuger und zumindest eine Leiteinrichtung zur Leitung eines Fluidstroms in eine Fluidstromrichtung zum Trennbereich. Die Leiteinrichtung ist wenigstens in einem Leitabschnitt durch das Förderelement zumindest mitausgebildet.

Sowohl der Fluidstrom als auch das Erntegemisch werden im Betrieb durch den Trennbereich geleitet. Unter dem Einfluss des Fluidstroms werden dabei Hackfrüchte und Beimengungen wie zum Beispiel Sand, Kraut oder Steine voneinander getrennt. Genutzt wird dazu die von der der Hackfrüchte abweichende Dichte der Beimengungen, wodurch der Fluidstrom auf diese eine andere Krafteinwirkung erzeugt wie auf die Hackfrüchte. Dazu wird der Fluidstrom vom Fluidstromerzeuger durch die Leiteinrichtung zum Trennbereich geleitet, in dem der Fluidstrom auf das Erntegemisch einwirkt.

Die DE 908 808 C offenbart eine Vorrichtung zum Trennen von Knollen von Kraut etc. Hierbei wird ein Erntegemisch von einem ersten auf eine zweites Förderband zu gefördert, zu dem ein Ventilator derart angeordnet ist, dass der von ihm erzeugte Luftstrom auf das zweite Förderband trifft.

Die DE 928 017 C betrifft eine Vorrichtung zum Entfernen von Steinen aus Kartoffeln. Ein Gemisch von Knollen und Steinen wird hierzu von einem Förderband laufend in eine Trennvorrichtung gebracht. Hier fällt das Gemisch auf ein Transportband mit Stacheln, die die Kartoffeln aufspießen und die Steine abprallen lassen. Die Trennung des Gemisches wird durch eine Düse verbessert, die mit einem Luftstrom auf das Transportband fallende Steine nach unten bläst.

Die US 3 227 276 A betrifft eine Kartoffelerntemaschine mit einer Saugglocke. Von einem ersten Siebband werden die Kartoffeln in den Bereich eines Endes eines zweiten Siebbandes gebracht. Durch den Saugluftstrom werden die Kartoffeln von dem ersten auf das zweite Siebband gehoben und Kraut abgesogen.

Die EP 0 212 151 A1 betrifft eine Krauttrennvorrichtung für Kartoffelerntemaschinen. Die Krauttrennvorrichtung umfasst einen ersten Förderer, der ein Erntegemisch einem zweiten Förderer zufördert. Im Übergangsbereich der beiden Förderer ist eine Düse vorgesehen, deren Luftstrom Krautteile an den zweiten Förderer andrückt.

Eine Trennvorrichtung einer Kartoffelerntemaschine, bei der die Leiteinrichtung nicht durch das Förderelement mitausgebildet ist, wird beispielsweise durch die DE 10 2014 006 842 A1 offenbart. Dabei wird das Erntegut durch ein Siebband in den Bereich einer Fallstufe verlagert, in dem ein Luftstrom auf das Erntegut einwirkt. In diesem Trennbereich befindet sich das Erntegut zeitweilig auf einem Rückhalteelement, von welchem die Kartoffeln in eine erste Richtung weitergefördert werden und die Steine in eine entgegengesetzte Richtung abgefördert werden. Alternativ oder ergänzend können in dem Trennbereich lose Krautbestandteile des Erntegemisches durch den Luftstrom abgeblasen werden.

Gemäß dem Stand der Technik wird der Luftstrom bis zum Bereich der Fallstufe mittels der Leiteinrichtung durch einen Luftkanal geleitet. Der Luftkanal hat eine Wandung mit einer äußeren Oberfläche, welche im Bereich des zufördernden Siebbandes angeordnet ist. Das dem Trennbereich zugewandte Ende dieser Oberfläche hat relativ zur Aufstandsfläche der Erntemaschine eine geringe Steigung. Im Betrieb lagern sich somit Partikel wie Sandkörner und Erdklumpen auf der Oberfläche ab und beeinträchtigen, nachdem sie einen gewissen Aufbau auf der Oberfläche gebildet haben, den Betrieb von angrenzenden, insbesondere umlaufenden Bauteilen der Trennvorrichtung.

Aufgabe der vorliegenden Erfindung ist die Bereitstellung einer Trennvorrichtung sowie einer Maschine umfassend die Trennvorrichtung, bei der die Ablagerung von Beimengungen verhindert wird.

Erfindungsgemäß wird die Aufgabe durch eine Trennvorrichtung der vorbezeichneten Art gelöst, wobei das Förderelement als im Wesentlichen fluidundurchlässiges Förderband ausgebildet ist und der Leitabschnitt durch einen den Fluidstrom in eine vertikale Richtung nach oben hin begrenzenden Abschnitt der Förderseite des Förderbandes ausgebildet wird.

Der Fluidstrom wird somit im Betrieb zwischen dem Fluidstromerzeuger und dem Trennbereich abschnittsweise an dem Leitabschnitt entlang geleitet. Somit wird die Leiteinrichtung teilweise durch das im Betrieb umlaufende und das Erntegemisch bzw. die Hackfrüchte fördernde Förderelement ausgebildet. Im Betrieb der Trennvorrichtung hat somit das Förderelement zum einen Kontakt zum Erntegemisch bzw. zu den Hackfrüchten und zum anderen Kontakt zum Fluidstrom, bevor dieser den Trennbereich erreicht. Damit erfüllt das Förderelement gleichzeitig zwei Funktionen.

Vorzugsweise ist das auf das Erntegut einwirkende Fluid Luft oder ein Luft-GasGemisch. Der Fluidstrom wird dabei durch ein Gebläse erzeugt, das in einer Erntemaschine mit der erfindungsgemäßen Fördervorrichtung insbesondere unterhalb des Trennbereiches angeordnet ist. Dadurch, dass ein Luftstrom teilweise am Förderelement entlangströmt, wird Schmutz, der sich auf dem Förderelement abgelagert hat, getrocknet bzw. abgeblasen.

Das Förderelement hat vorzugsweise einen einteiligen, alternativ einen mehrteiligen Aufbau. Die Leiteinrichtung ist in dem wenigstens einen Leitabschnitt insbesondere durch eine Mehrzahl an Förderelementen zumindest mitausgebildet. Vorzugsweise ist der Leitabschnitt durch nur ein Förderelement mitausgebildet. Der Leitabschnitt hat außerdem in einer zur Fluidstromrichtung orthogonalen Richtung vorzugsweise eine geradlinige Erstreckung und ist besonders bevorzugt zumindest abschnittsweise eben. Die Fluidstromrichtung ist die Richtung, in die der Fluidstrom durch die Leiteinrichtung geleitet wird. Insbesondere ist die Fluidstromrichtung auf den Trennbereich gerichtet.

Die Leiteinrichtung und damit der Leitabschnitt leiten das Fluid, während dieses vom Fluidstromerzeuger zum Trennbereich strömt. Die Leiteinrichtung ist vorzugsweise als zumindest in Abschnitten starres Gehäuse ausgebildet, welches unter anderem den Fluidstromerzeuger umgibt. Zwischen dem Fluidstromerzeuger und dem Trennbereich umgibt die Leiteinrichtung den Fluidstrom von zumindest vier Gehäuseseiten, die bevorzugt rechtwinklig zueinander angeordnet sind und sich in Förderrichtung erstrecken. Das Förderelement ersetzt in diesem Fall zumindest teilweise eine Gehäuseseite bzw. Wandung der Leiteinrichtung.

Bevorzugt erstreckt sich die Leiteinrichtung bis zum Trennbereich. Alternativ wird der Fluidstrom nur auf einem Teilabschnitt zwischen der Fluidstromerzeuger und dem Trennbereich durch die Leiteinrichtung geleitet.

Das Förderelement ist insbesondere als rotierende Walze oder umlaufendes Band ausgebildet. Das Förderelement fördert entweder das Erntegemisch in Richtung des Trennbereiches oder die Hackfrüchte nach Verlassen des Trennbereiches. Alternativ verläuft das Förderelement durch den Trennbereich hindurch. Das Förderelement grenzt in einer vorteilhaften Ausgestaltung der Erfindung unmittelbar an den Trennbereich an, alternativ ist in Förderrichtung des Erntegemisches bzw. der Hackfrüchte wenigstens ein weiteres Bauteil der Fördervorrichtung zwischen dem Förderelement und dem Trennbereich angeordnet.

Im Trennbereich ist vorzugsweise eine Fallstufe für das Erntegemisch ausgebildet, die zumindest die Hackfrüchte hinunterfallen. Der Fluidstrom wirkt dabei zumindest während des Fallens, insbesondere auch nach Abschluss des Fallens auf die Hackfrüchte bzw. die Beimengungen ein. Insbesondere fallen zumindest die Hackfrüchte auf ein Rüttelrost, das Ausnehmungen aufweist, durch die zumindest ein Teil des Fluidstroms hindurchtritt und so von unten auf die Hackfrüchte bzw. die Beimengungen einwirkt. Vorzugsweise kreuzen sich der Fluidstrom und das Erntegemisch im Trennbereich. Besonders bevorzugt führt das Rüttelrost im Betrieb eine Rüttelbewegung aus, um zum einen die Trennwirkung durch den Fluidstrom zu fördern und zum anderen den Hackfrüchten Impulse zur Weiterleitung aus dem Trennbereich hinaus zu geben.

In Förderrichtung vor dem Rüttelrost, welches in Förderrichtung insbesondere leicht ansteigt, sind in dieser Ausgestaltungsform mehrere bewegliche Trennelemente angeordnet, die Beimengungen mit einer höheren Dichte als die Hackfrüchte wie Steine durchlassen und die Hackfrüchte selbst nicht durchlassen. Die Steine gelangen nach Passieren der Trennelemente schwerkraftinduziert auf ein Leitblech, dass die Steine zumindest anteilig entgegen der Förderrichtung zu einer Steinabfuhreinrichtung leitet, welche insbesondere als ein zumindest teilweise waagerecht verlaufendes und sich quer zur Förderrichtung erstreckendes Förderband ausgebildet ist. Dadurch verlassen die Hackfrüchte und zumindest ein Teil der Beimengungen den Trennbereich in unterschiedlichen Richtungen.

In dieser Ausgestaltungsform tritt der Fluidstrom zum einen durch Ausnehmungen im Rüttelrost und zum anderen durch die Trennelemente. In der Leiteinrichtung teilt sich vor Erreichen des Trennbereiches der Fluidstrom in einen Teilstrom, der unmittelbar durch das Rüttelrost tritt und einen weiteren Teilstrom, der zunächst durch das Leitblech und anschließend durch die Trennelemente bzw. zwischen diesen hindurchtritt. Auf das Erntegemisch im Trennbereich wirkt der Fluidstrom somit durch die Trennelemente und das Rüttelrost ein. Um die Beimengungen durch die Abführeinrichtung abführen zu können, sind seitliche und sich parallel zur Förderrichtung erstreckende Teile der Leiteinrichtung nicht fluiddicht verschlossen. Durch die erfindungsgemäße Konstruktion kann die Trennvorrichtung gleichwohl ausreichend kompakt ausgebildet werden.

In einer alternativen Ausführungsform der erfindungsgemäßen Trennvorrichtung gelangt das Erntegemisch in eine erste Förderrichtung in den Trennbereich und Verlassen die Hackfrüchte den Trennbereich in eine weitere, von der ersten abweichende Förderrichtung. Die weitere Förderrichtung ist dabei insbesondere orthogonal zur ersten angeordnet. Dadurch und durch die erfindungsgemäße Ausbildung ist die Fördervorrichtung besonders einfach und kompakt in bestehende Überladestufen von Erntemaschinen integrierbar.

Die erfindungsgemäße Fördervorrichtung ist für den Einsatz in unterschiedlichen Maschinen geeignet. Dabei dient sie insbesondere der Trennung von Hackfrüchten wie Kartoffeln oder Rüben von Beimengungen. Sie dient dem Einsatz sowohl in Erntemaschinen als auch in Verlade- oder Sortiermaschinen, welche sowohl mobil, d. h. an unterschiedlichen Orten bzw. Äckern, als auch stationär betrieben werden.

Vorteil der erfindungsgemäßen Ausgestaltung der Trennvorrichtung ist weiterhin, dass durch die Ausbildung eines Teiles der Leiteinrichtung durch das Förderelement statt durch ein ortsfestes Leitelement die Verschmutzung des Leitabschnittes begrenzt wird. Insbesondere dadurch, dass Teile der Leiteinrichtung mit von einer Bodenfläche abgewandten Oberflächen, welche nur geringe Steigungen haben, durch das Förderelement ersetzt werden können, wird eine dauerhafte Ablagerung von Partikeln wie Sandkörnern und Erdklumpen auf den Oberflächen wirksam verhindert. Durch den ausbleibenden Aufbau von Ablagerungen durch die Partikel werden etwaige an die Leiteinrichtung angrenzende Bauteile der Trennvorrichtung nicht weiter durch Ablagerungen beeinträchtigt und wird somit die Zuverlässigkeit der Trennvorrichtung erhöht. Durch die Nutzung des Förderelementes für zweierlei Funktionen, zum einen die Förderung des Erntegemisches bzw. der Hackfrüchte und zum anderen das Leiten des Fluidstromes, kann außerdem Material eingespart und ein höherer Wirkungsgrad der Trennvorrichtung realisiert werden. Die Trennvorrichtung baut außerdem in der Höhe kompakt.

Vorzugsweise erstreckt sich der Leitabschnitt bis zum Trennbereich. Damit grenzt auch das Förderelement in seiner Förderrichtung unmittelbar an den Trennbereich. Das Erntegemisch tritt unmittelbar vom Förderelement in den Trennbereich über bzw. anders herum. Auf diese Weise kann der Leitabschnitt besonders ökonomisch durch das Förderelement ausgebildet werden und erlaubt die Ausbildung eines besonders großen Leitabschnittes durch das Förderelement.

Bevorzugt grenzt dabei der Leitabschnitt unmittelbar an den Trennbereich an. Alternativ ist zwischen dem Leitabschnitt und dem Trennbereich ein Spalt, in dem beispielsweise eine Querstrebe der Leiteinrichtung angeordnet ist. Dieser Spalt hat in Fluidstromrichtung jedenfalls eine geringere Erstreckung als der Leitabschnitt in Fluidstromrichtung. Durch diese Erstreckung des Leitabschnittes wird die Partikelablagerung insbesondere im an den Trennbereich angrenzenden Teil der Leiteinrichtung besonders wirksam vermieden. Dadurch werden insbesondere das Förderelement oder andere unmittelbar am Trennbereich angrenzende Bauteile der Trennvorrichtung nicht durch einen Partikelaufbau auf der Leiteinrichtung in ihrer Zuverlässigkeit eingeschränkt.

Erfindungsgemäß ist das Förderelement als im Wesentlichen fluidundurchlässiges Förderband ausgebildet. Höchstens 10 % des Fluidstroms tritt im Bereich des Leitabschnittes durch das Förderelement hindurch. Vorteilhaft daran ist, dass der durch den Fluidstromerzeuger erzeugte Fluidstrom zu einem möglichst großen Anteil im Trennbereich genutzt werden kann und dass im Leitabschnitt austretende Luft außerhalb der Leiteinrichtung keinen Verschleiß verursacht. Durch die Ausbildung des Förderelementes als Förderband kann der Leitabschnitt besonders einfach und vorteilhaft ausgeformt ausgebildet werden. Das Förderband ist vorzugsweise einstückig oder durch eine Mehrzahl an Förderbandteilen ausgebildet. Durch die Nutzung des Förderbandes als Förderelement kann die für den Fluidstrom optimale Form der Leiteinrichtung auch im Bereich des Leitabschnittes besonders einfach realisiert werden. Außerdem kann durch die Nutzung des luftundurchlässigen Förderbandes das Ausmaß von Fluidstromverlusten im Bereich des Leitabschnittes besonders niedrig gehalten werden.

Insbesondere bildet die Seite des Förderbandes, auf welcher das Erntegemisch bzw. die Hackfrüchte während der Förderung aufliegen, den Leitabschnitt dergestalt aus, dass diese Seite dem Fluidstrom bei Ausbildung des Leitabschnittes zugewandt ist. Bevorzugt liegt diese Seite im Bereich des Leitabschnittes abschnittsweise in einer gedachten Ebene, wodurch die Leiteinrichtung den Fluidstrom abschnittsweise geradlinig und auf kürzestem Wege vom Fluidstromerzeuger zum Trennbereich leiten kann.

Besonders bevorzugt ist das Förderband als Plattenband mit einer Mehrzahl an in Förderrichtung aneinander anliegenden Förderbandplatten ausgebildet. Die Förderbandplatten haben insbesondere dieselbe Breite wie das Förderband und grenzen in Umlaufrichtung aneinander an. Sie sind dabei formstabil und verformen sich während einer Umlenkung des Förderbandes nur unwesentlich. Hergestellt sind sie bevorzugt aus einem Kunststoff. Benachbarte Förderbandplatten sind bevorzugt mittels einer Nut-Feder-Anordnung miteinander verbunden. Dadurch wird ein Spalt zwischen benachbarten Förderbandplatten, durch den etwa ein Teil des Fluidstromes hindurchtreten könnte, wirksam verhindert. Alternativ sind benachbarte Förderbandplatten mittels zumindest eines Scharniers miteinander verbunden. Durch die Nutzung der Förderbandplatten wird der Leitabschnitt besonders formstabil ausgebildet und hat der Fluidstrom durch seinen Druck insbesondere einen geringeren Einfluss auf die Form des Leitabschnittes. Daraus geht zusätzlich eine größere Dichtheit und Zuverlässigkeit der Leiteinrichtung im Bereich des Leitabschnittes hervor.

Alternativ ist das Förderband als eine Gurtschlaufe ausgebildet. Diese ist vorzugsweise einstückig oder alternativ aus einer Mehrzahl an Gurtschlaufenteilen zusammengesetzt. Die Gurtschlaufe hat den Vorteil einer maximalen Dichtheit aufgrund von nicht vorhandenen Spalten zwischen den Förderbandteilen. Außerdem ist ein aus einer Gurtschlaufe bestehendes Förderband besonders flexibel umlenkbar und somit eine Vielzahl an Form- und Führungsmöglichkeiten des Förderbandes im Bereich des Leitabschnittes gegeben.

Erfindungsgemäß wird der Leitabschnitt durch eine Förderseite des Förderbandes ausgebildet. Der Leitabschnitt wird durch einen den Fluidstrom in eine vertikale Richtung nach oben hin begrenzenden Abschnitt der Förderseite des Förderbandes ausgebildet. Die Förderseite ist die Seite des Förderbandes, auf der im Betrieb abschnittsweise das Erntegemisch bzw. die Hackfrüchte aufliegen und die zumindest abschnittsweise nach außen gerichtet ist. Diese Förderseite bildet in einem Abschnitt des Umlaufes des Förderbandes, in dem auf der Förderseite kein Erntegemisch bzw. keine Hackfrüchte aufliegen, die Leiteinrichtung im Leitabschnitt mit aus. Bevorzugt begrenzt der Leitabschnitt den Fluidstrom nach oben hin, das heißt der Leitabschnitt ist im Betrieb dem Boden zugewandt. Dadurch kann der Fluidstrom in einem optimalen Winkel, insbesondere schräg aufwärts, auf den Trennbereich geführt werden. Durch die Mitausbildung der Leiteinrichtung durch die Förderseite kann die Fördervorrichtung besonders platzsparend ausgebildet werden. Dabei ist insbesondere der Förderbandteil, auf welchem das Erntegemisch aufliegt bzw. die Hackfrüchte aufliegen, benachbart zum den Leitabschnitt ausbildenden Förderbandteil angeordnet.

Vorzugsweise ist das den Leitabschnitt ausbildende Förderelement dasjenige, welches das Erntegemisch dem Trennbereich zufördert. Dadurch ist insbesondere bei Vorhandensein einer Fallstufe im Trennbereich eine Führung des Fluidstromes möglich, das ein Auftreffen des Fluidstromes auf das Erntegemisch zumindest annähernd im rechten Winkel zu dessen Bewegungsrichtung ermöglicht. Besonders bevorzugt kann durch die Ausbildung des Leitabschnittes mit dem zufördernden Förderelement der Fluidstrom so gerichtet sein, dass die Hackfrüchte im Trennbereich zumindest anteilig in Förderrichtung angeblasen werden, wodurch der Fluidstrom zur Förderung der Hackfrüchte aus dem Trennbereich beitragen kann.

Bevorzugt hat der Leitabschnitt in Fluidstromrichtung eine Länge von mindestens 20 cm, insbesondere von mindestens 40 cm, bis hin zu einer Länge von insbesondere maximal 3,50. Der Leitabschnitt wird vom Förderelement mitausgebildet, jedoch nicht notwendigerweise einzig durch das Förderelement ausgebildet. Insbesondere weist die Leiteinrichtung an der dem Fluidstrom zugewandten Seite des den Leitabschnitt ausbildenden Teils des Förderelementes stabilisierende Querstreben oder etwa ein Gitter auf, das den Leitabschnitt mitausbildet und die Leiteinrichtung bzw. die Form des Leitabschnittes vorgibt bzw. stabilisiert. Die Mindesterstreckung des Leitabschnittes in Fluidstromrichtung verhindert die Ablagerung von Schmutzpartikeln auf der Leiteinrichtung in einem großen Bereich.

Besonders bevorzugt hat der Leitabschnitt eine zur Fluidstromrichtung orthogonale Breite von zumindest 80 %, insbesondere zumindest 90 % der Breite des Förderelementes. Das Förderelement bildet den Leitabschnitt somit mit einem weit überwiegenden Teil seiner zur Umlaufrichtung des Förderelementes orthogonalen Breite mit aus. Durch diese Ausgestaltungsform kann zum einen die Ablagerung von Schmutzpartikeln auf Oberflächen der Leiteinrichtung effektiv vermieden und zum anderen die Fluidstromführung besonders effektiv ausgestaltet werden. Insbesondere grenzt das Förderband in äußeren Seitenbereichen im Bereich des Leitabschnittes unmittelbar an die Leiteinrichtung an und verhindert somit einen Fluiddurchtritt zwischen Förderelement und Leiteinrichtung zumindest weitgehend. Die Breite des Leitabschnittes erlaubt die Realisierung einer über die des Förderelementes weitgehend homogene Einwirkung des Fluidstroms auf das Erntegemisch im Trennbereich und eine besonders weitgehende Vermeidung ortsfester Leiteinrichtungsteile, die zum Aufbau einer festen Schmutzschicht neigen.

In einer vorteilhaften Ausgestaltung der Erfindung weist der Leitabschnitt relativ zu einer Horizontalen zumindest teilweise eine Steigung von höchstens 60 %, insbesondere höchstens 30 % auf. Die Horizontale ist im Falle der Anwendung der Fördervorrichtung in einer Erntemaschine eine ebene Aufstandsfläche, auf der die Erntemaschine aufsteht. Dadurch, dass der Leitabschnitt zumindest teilweise eine Oberfläche aufweist, die eine Steigung von zwischen 0° und 60° bzw. 0° und 30° hat, kann der Fluidstrom durch den Leitabschnitt besonders flach und damit für eine fluidstrominduzierte Förderung der Hackfrüchte vorteilhaft in den Trennbereich eingeleitet werden. Dabei wird die Steigung in einem zur Förderrichtung des Erntegemisches parallelen Längsschnitt gemessen. Dieser flache Teil der Leiteinrichtung, auf dem sich im Stand der Technik besonders ausgeprägt Partikel ansammeln und sich Schmutz aufbaut, wird somit durch das Förderelement ersetzt. Somit muss die Form der Leitungseinrichtung gegenüber dem Stand der Technik nur unwesentlich verändert werden und der Fluidstrom kann in optimalem Winkel auf das Erntegemisch treffen.

Vorzugsweise weist die Trennvorrichtung zumindest eine relativ zum Fluidstromerzeuger ortsfest und dicht am Förderelement angeordnete Abstreiflippe auf. Diese Abstreiflippe begrenzt vorzugsweise den Leitabschnitt in der Fluidstromrichtung. Die Abstreiflippe liegt entweder unmittelbar am Förderelement an und streift dieses während des Umlaufens des Förderelementes oder ist vom Förderelement geringfügig beabstandet, wodurch Partikel, die auf dem Förderelement aufgebaut haben, abgestreift werden, jedoch keine Reibung auf dem Förderelement erzeugt wird. Die Abstreiflippe ist besonders bevorzugt sich orthogonal zur Umlaufrichtung des Förderelementes erstreckend daran angeordnet und hat insbesondere eine Breite, die der des Förderelementes entspricht. Bevorzugt ist die Abstreiflippe an einem Querträger befestigt, der zusammen mit der Abstreiflippe zwischen dem Leitabschnitt und dem Trennbereich und bezüglich des Fluidstromerzeugers ortsfest angeordnet ist. Vorteil der elastischen oder starren Abstreiflippe ist die damit erreichbare Reinigung des Förderelementes insbesondere vor Einlaufen in den Leitabschnitt. Dadurch kann die Eintragung von Schmutz bzw. von an dem Förderelement haftenden Beimengungen in die Leiteinrichtung weitgehend vermieden werden und eine größere Dichtheit im Grenzbereich zwischen Förderelement und Leiteinrichtung realisiert werden.

Bevorzugt weist die Trennvorrichtung zumindest eine den Leitabschnitt zu einem weiteren Teil der Leiteinrichtung hin abdichtende und relativ zum Fluidstromerzeuger ortsfest am Förderelement angeordnete Dichtlippe auf. Diese ist insbesondere im Bereich des in Umlaufrichtung des Förderelementes hinteren Endes des Leitabschnittes angeordnet. Dabei verläuft sie bevorzugt orthogonal zur Umlaufrichtung des Förderelementes und insbesondere parallel zur Abstreiflippe. Die Dichtlippe ist entweder am Förderelement anliegend oder mit einem geringen Abstand zum Förderelement daran angeordnet. Insbesondere hat die Dichtlippe eine Breite, die zumindest der des Leitabschnittes entspricht und ist an der Leiteinrichtung angeordnet bzw. Teil davon. Durch die Dichtlippe wird der Leitabschnitt gegen einen Austritt des Fluidstromes aus der Leiteinrichtung in diesem Bereich abgedichtet, wodurch ein größerer Anteil des durch den Fluidstromerzeuger erzeugten Fluidstromes den Trennbereich erreicht. Die größere Dichtheit erhöht die Effizienz der Trennvorrichtung.

Besonders bevorzugt weist die Trennvorrichtung zumindest ein Führungselement auf, das einen Förderbandabschnitt führt, der den Leitabschnitt mitausbildet. Der Förderbandabschnitt ist ein in Umlaufrichtung vom Rest des Förderbandes abgegrenzter Teil davon und hat die gleiche Breite wie das Förderband. Das Führungselement hat Kontakt zu zumindest einer Oberfläche des Förderbandabschnittes und bewirkt eine zuverlässige Positionierung dessen zur optimalen Ausbildung des Leitabschnittes.

In einer vorteilhaften Ausgestaltung der Erfindung ist zumindest eines von mehreren Führungselementen als zumindest auf der vom Fluidstrom abgewandten Seite des Förderbandabschnittes angeordnete Aufdrückrolle ausgebildet. Die Aufdrückrolle rollt im Betrieb auf der inneren Oberfläche des Förderbandes ab und hat eine Rotationsachse, die insbesondere parallel zu einer Antriebsachse des Förderelementes ist. Die Aufdrückrolle verhindert ein Abheben des Förderelementes von der Leiteinrichtung aufgrund des erhöhten Druckes darin und nimmt zumindest einen Teil der durch den Fluidstrom auf den Förderbandabschnitt aufgebrachten Kraft auf. Besonders bevorzugt weist die Trennvorrichtung eine Mehrzahl von Aufdrückrollen auf, die zumindest auf seitlichen und an den äußeren Förderbandrand angrenzenden Teilen des Förderbandabschnittes aufliegen. Dabei weist die Trennvorrichtung insbesondere mehrere in Umlaufrichtung des Förderelementes voneinander beabstandete und insbesondere mehrere in Richtung der Rotationsachse voneinander beabstandete Aufdrückrollen auf. Durch die zuverlässige Positionierung des Förderbandabschnittes sind eine besonders effektive Führung des Fluidstromes sowie eine verbesserte Dichtheit des Leitabschnittes sichergestellt.

Vorzugsweise ist zumindest eines der mehreren Führungselemente als zumindest auf der dem Fluidstrom zugewandten Seite des Förderbandabschnittes angeordnete Positionsrolle ausgebildet. Die Positionsrolle hat eine zu der der Aufdrückrolle parallele Rotationsachse und ist an der gegenüberliegenden Seite des Förderbandabschnittes angeordnet. Im Betrieb rollt der Förderbandabschnitt auf der Positionsrolle ab und wird somit bei minimalen Energieverlusten besonders zuverlässig an der Leiteinrichtung positioniert. Die Trennvorrichtung hat besonders bevorzugt eine Mehrzahl an Positionsrollen, die zumindest in Umlaufrichtung des Förderelementes oder quer dazu voneinander beabstandet sind.

In einer vorteilhaften Ausgestaltung der Erfindung ist zumindest eines der mehreren Führungselemente als Gleitelement ausgebildet, das zumindest an der dem Fluidstrom zugewandten Seite des Förderbandabschnittes anliegt und sich in Fluidstromrichtung, insbesondere über die gesamte Länge des Förderbandabschnittes, erstreckt. Im Betrieb gleitet das Förderelement im Bereich des Leitabschnittes auf dem Gleitelement, wodurch ein Durchhängen des Förderbandabschnittes verhindert wird. Der Förderbandabschnitt liegt auf dem Leitelement auf, welches insbesondere eine Breite von höchstens 20 % derjenigen des Förderelementes hat und sich hauptsächlich in Fluidstromrichtung erstreckt. Dadurch wird die Positionierung des Förderelementes im Bereich des Leitabschnittes zuverlässig sichergestellt. Vorzugsweise erstreckt sich das Gleitelement zwischen der Dichtlippe und der Abstreiflippe und stellt eine mechanische Verbindung zwischen diesen dar. Somit wird die mechanische Stabilität der Leiteinrichtung erhöht. Besonders bevorzugt hat die Trennvorrichtung eine Mehrzahl an Gleitelementen, die parallel zueinander angeordnet sind und quer zur Umlaufrichtung des Förderelementes voneinander beabstandet sind. Insbesondere liegt der Förderbandabschnitt mit seitlichen Bereichen, welche nicht den Leitabschnitt mitausbilden, auf dem zumindest einen Gleitelement auf.

Die der Erfindung zugrunde liegende Aufgabe wird außerdem durch eine Maschine zum Ernten oder Überladen von Hackfrüchten gelöst, die eine Aufnahmevorrichtung und eine erfindungsgemäße Trennvorrichtung hat. Die Aufnahmevorrichtung dient insbesondere zur Aufnahme von Hackfrüchten aus der Erde. Die Maschine ist insbesondere als Erntemaschine ausgebildet, welche der Ernte von Hackfrüchten wie Kartoffeln oder Rüben unmittelbar aus dem Boden dient. Diese auf dem Acker eingesetzten Maschinen haben entweder einen einen Speicherraum für die Hackfrüchte ausbildenden Bunker oder werden als Überladeerntemaschine genutzt, welche keinen eigenen Speicherraum hat. Alternativ ist die Maschine als Sortier- bzw. Transportanlage ausgebildet, bei der die Hackfrüchte von der Aufnahmevorrichtung aufgenommen, durch die Trennvorrichtung von Beimengungen getrennt und anschließend an einen vom Ort der Aufnahmevorrichtung abweichenden Ort abgegeben werden. Die Trennvorrichtung ist dabei am Rahmen der Maschine abgestützt oder bildet diese mit aus.

Weitere Einzelheiten und Vorteile der Erfindung sind den nachfolgend beschriebenen schematisch dargestellten Ausführungsbeispielen zu entnehmen. Es zeigen:
- Fig. 1: eine schematische Darstellung eines Längsschnitts einer erfindungsgemäßen Trennvorrichtung,
- Fig. 2: einen teilweise dargestellten Längsschnitt einer erfindungsgemäßen Trennvorrichtung aus einer gegenüberliegenden Perspektive,
- Fig. 3: eine Übersichtsdarstellung der teilweise dargestellten Trennvorrichtung gemäß Fig. 2,
- Fig. 4: einen vollständig dargestellten Längsschnitt einer erfindungsgemäßen Trennvorrichtung,
- Fig. 5: einen Längsschnitt eines Teils einer erfindungsgemäßen Maschine mit einer erfindungsgemäßen Trennvorrichtung,
- Fig. 6: eine Übersichtsdarstellung der erfindungsgemäßen Maschine gemäß Fig. 5,
- Fig. 7: eine Übersichtsdarstellung einer alternativen erfindungsgemäßen Maschine.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1 oder des Anspruchs 15. Sofern sinnvoll, sind funktional gleichwirkende Teile mit identischen Bezugsziffern versehen.

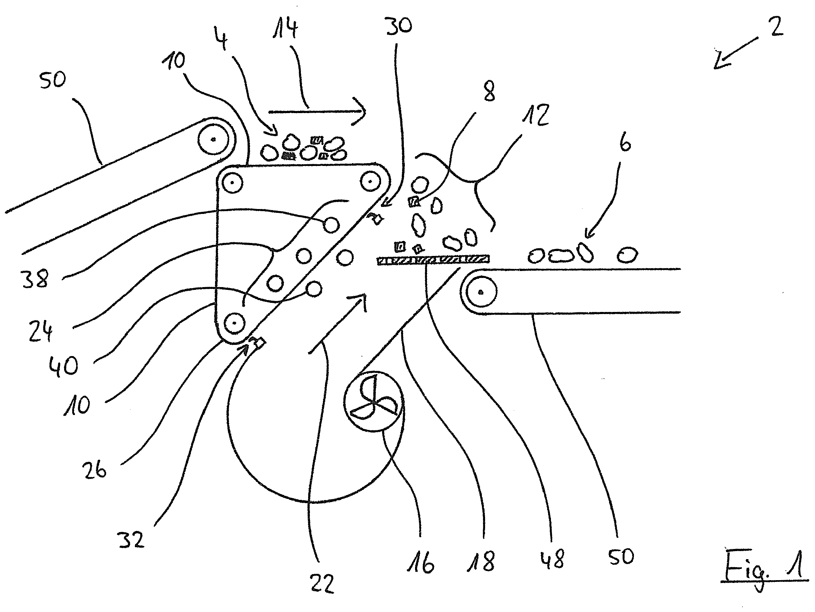

Fig. 1 zeigt eine erfindungsgemäße Trennvorrichtung 2 zur Trennung eines Erntegemisches 4 von Hackfrüchten 6 und Beimengungen 8. Die Fördervorrichtung 2 weist ein als Förderband ausgebildetes Förderelement 10 auf, das das Erntegemisch 4 einem Trennbereich 12 zuführt. Das Erntegemisch 4 wird dabei in eine Förderrichtung 14 bewegt. Im Trennbereich 12 fällt das Erntegemisch 4 eine Fallstufe hinunter auf ein Rüttelrost 48. Im Trennbereich 12 wirkt dabei ein Fluidstrom, welcher in Fluidstromrichtung 22 strömt, auf das Erntegemisch 4 ein.

Der Fluidstrom wird von einem Fluidstromerzeuger 16 erzeugt und von einer Leiteinrichtung 18 zum Trennbereich 12 geleitet. Die Leiteinrichtung 18 wird in einem ebenen Leitabschnitt 24 durch das Förderelement 10 mitausgebildet. Der Leitabschnitt 24 ist einerseits begrenzt durch eine Dichtlippe 32 und andererseits begrenzt durch eine Abstreiflippe 30. Im Bereich des Leitabschnittes 24 wird das als Förderband ausgebildete Förderelement 10 geführt durch Positionsrollen 40, welche fluidstromseitig am Förderelement 10 anliegen, und Andrückrollen 38, welche auf der gegenüberliegenden Seite des Förderelementes 10 anliegen.

Vor der Fördervorrichtung 2 befindet sich ein erstes Igelband 50, durch welches das Erntegemisch 4 auf das Förderelement 10 aufgebracht wird, von dem es in Förderrichtung 14 weitertransportiert wird. Nach Passieren des Rüttelrostes 48, welches Ausnehmungen aufweist, durch die im Betrieb ein Teil des Fluidstroms durchströmt, gelangen die Hackfrüchte 6 auf ein weiteres Igelband 50, welches sie von der Trennvorrichtung 2 abtransportiert.

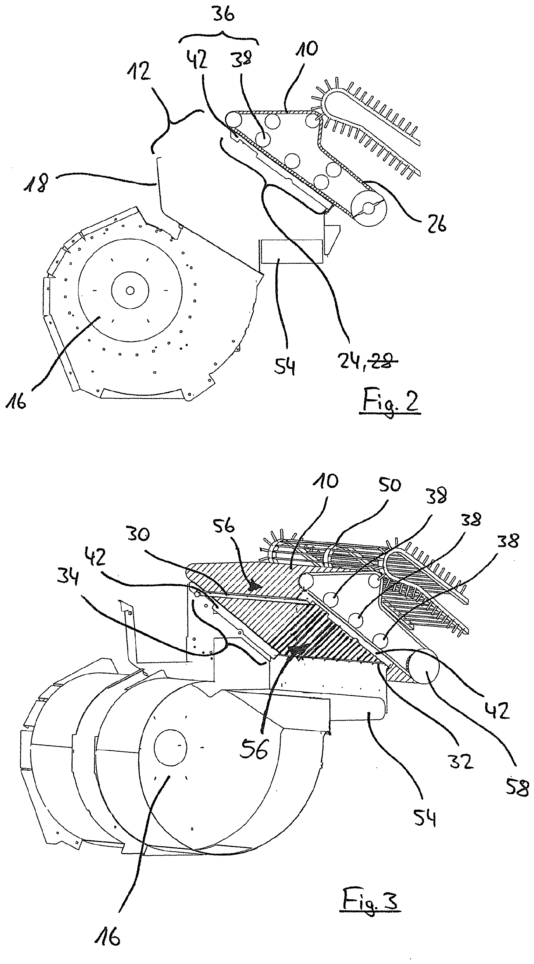

Fig. 2, welche eine Fördervorrichtung 2 in einem Längsschnitt nur teilweise darstellt, zeigt mit sich in Fluidstromrichtung 22 entlang des Leitabschnittes 24 erstreckenden Gleitelementen 42 weitere Führungselemente 36. Diese dienen der Führung und Positionierung des Förderbandabschnittes 34 quer zur Fluidstromrichtung 22 (vergl. Fig. 3), welcher den Leitabschnitt 24 ausbildet. Der Leitabschnitt 24 erstreckt sich bis zum Trennbereich 12 und ist einzig durch eine Abstreiflippe 30 von diesem getrennt. Fig. 2 und Fig. 3 zeigen, dass der Leitabschnitt 24 durch eine nach außen gerichtete Förderseite 56 des fluidundurchlässigen Förderbandes ausgebildet wird, auf welchem in einem oberen Bereich im Betrieb auch das Erntegemisch 4 aufliegt. In einem zweiten Bereich wird durch die Förderseite 56 der ebene Leitabschnitt 24 ausgebildet und der Fluidstrom nach oben begrenzt wird. Das Antriebselement 58 folgt in Umlaufrichtung des Förderbandes auf den Förderbandabschnitt 34.

Fig. 3 zeigt, dass der Förderbandabschnitt 34 über die gesamte Länge auf den Gleitelementen 42 aufliegt. Die Breite des Leitabschnittes 24, welche von einem Gleitelement bis zum anderen Gleitelement gemessen wird, entspricht annähernd der Gesamtbreite des Förderbandes. Der Leitabschnitt 24 ist eben und hat relativ zu einer Horizontalen eine Steigung von weniger als 60°.

Nicht dargestellt in Fig. 2 und Fig. 3 sind seitliche, jeweils vor und hinter der dargestellten Ebene angeordnete Seitenteile der Leiteinrichtung 18. Außerdem nicht dargestellt sind die Bauteile, durch die die Kartoffeln 6 und die Beimengungen 8 im und nach dem Trennbereich 12 gefördert werden.

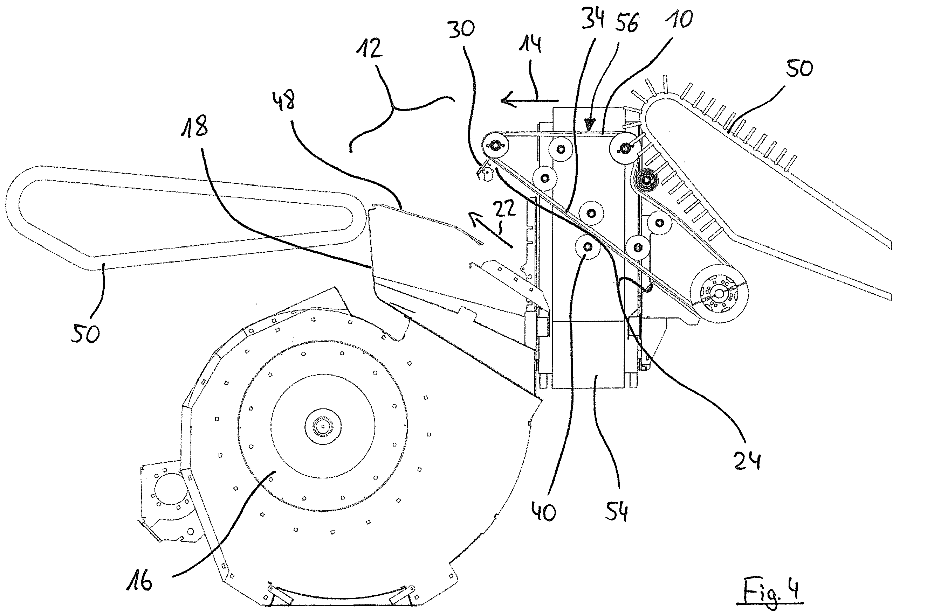

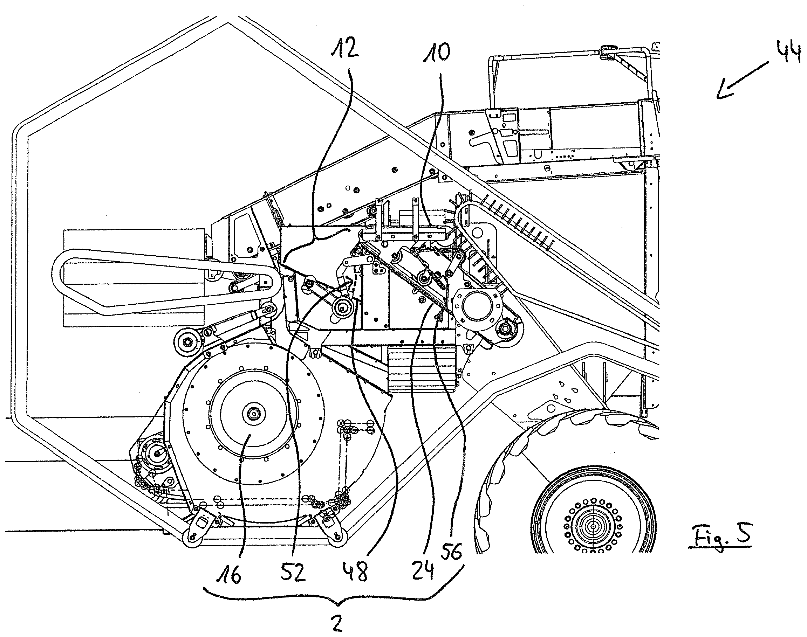

Fig. 4 zeigt einen Längsschnitt einer Fördervorrichtung 2, wobei auch eine Steinabfuhreinrichtung 54 dargestellt wird. Durch diese werden insbesondere Steine, welche den Trennbereich 12 und insbesondere das Rüttelrost 48 in eine der Förderrichtung 14 im Wesentlichen entgegengesetzte Richtung verlassen, quer zur Bildebene abtransportiert. Zwischen dem Rüttelrost 48 und der Steinabfuhreinrichtung 54 ist ein Leitblech angeordnet. Durch den Fluidstrom und eine hochfrequente Bewegung des Rüttelrostes 48 bekommen die Hackfrüchte 6 Bewegungsimpulse, durch die sie auf das in Förderrichtung folgende Igelband 50 gelangen. Aufgrund der größeren Dichte insbesondere von Steinen überwinden diese nicht die leichte Steigung des Rüttelrostes 48 und passieren in einer entgegengesetzten Richtung Trennelemente 52, welche in Fig. 5 angedeutet sind. Durch Passieren der Trennelemente 52 gelangen die Steine auf das fluiddurchlässige Leitblech, das sie zur Steinabfuhreinrichtung 54 leitet.

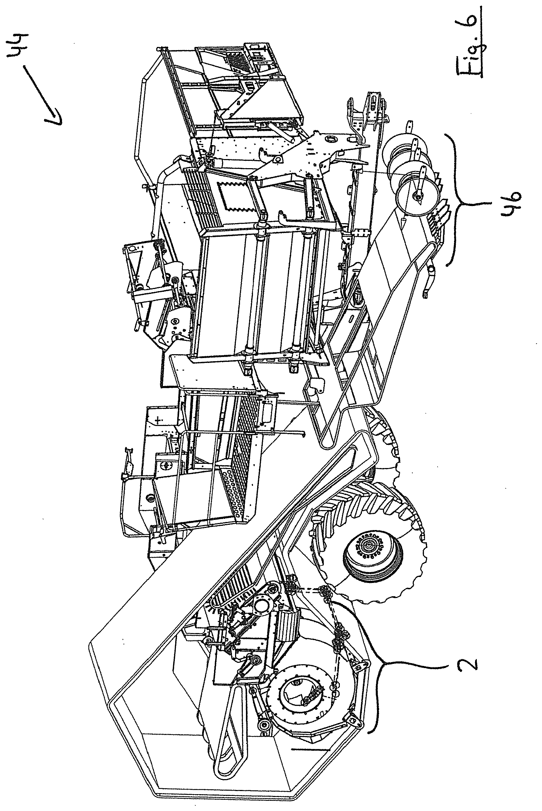

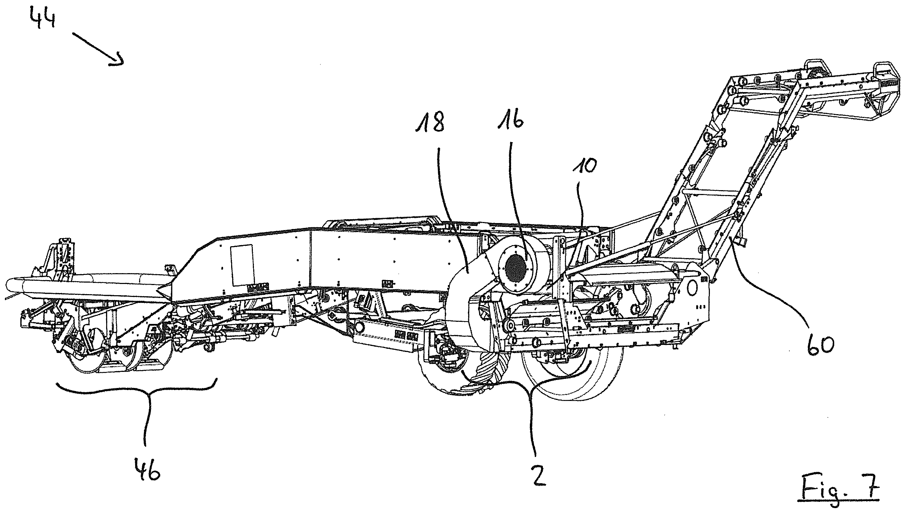

Fig. 5 zeigt in teilweise aufgeschnittener Darstellung den hinteren Teil einer erfindungsgemäßen Maschine 44 zur Ernte von Hackfrüchten 6, in dem die erfindungsgemäße Fördervorrichtung 2 angeordnet ist. Durch die erfindungsgemäße Ausbildung kann sich die Aufbauhöhe der Trennvorrichtung in dem eng besetzten Teil der Maschine reduzieren. Fig. 6 zeigt die gleiche zu ziehende Maschine 44 in einer Gesamtdarstellung mit einer Aufnahmevorrichtung 46. Fig. 7 zeigt eine alternative Ausführungsform der erfindungsgemäßen Maschine 44 mit einer Aufnahmevorrichtung 46, wobei wiederum die Fördervorrichtung 2 im hinteren Bereich der Erntemaschine 44 angeordnet ist. Das Förderelement 10 fördert in dieser Ausführungsform das Erntegemisch 4 in eine Förderrichtung 14, die zu einer weiteren Förderrichtung eines weiteren Förderelementes rechtwinklig angeordnet ist. Die Förderrichtung 14 ist dabei parallel zur Fahrtrichtung der Erntemaschine 44 angeordnet. Das weitere Förderelement, auf das die Hackfrüchte 6 nach Überwindung einer Fallstufe zwischen den Förderelementen 10 gelangen, ist Teil eines Querelevators 60, welcher die Hackfrüchte 6 quer zur Fahrtrichtung transportiert.

## Patentansprüche

1. Trennvorrichtung (2) zur Trennung eines Erntegemisches (4) von Hackfrüchten (6) und Beimengungen (8), umfassend wenigstens ein im Betrieb umlaufendes und als Förderband ausgebildetes Förderelement (10) zumindest zur Zuführung des Erntegemisches (4) zu einem Trennbereich (12) oder zur Abführung der Hackfrüchte (6) vom Trennbereich (12) in eine Förderrichtung (14), sowie zumindest einen Fluidstromerzeuger (16) und zumindest eine Leiteinrichtung (18) zur Leitung eines Fluidstroms in eine Fluidstromrichtung (22) zum Trennbereich (12), wobei die Leiteinrichtung (18) in wenigstens einem Leitabschnitt (24) durch das Förderelement (10) zumindest mitausgebildet ist, **dadurch gekennzeichnet, dass** das Förderelement (10) als im Wesentlichen fluidundurchlässiges Förderband ausgebildet ist und der Leitabschnitt (24) durch einen den Fluidstrom in eine vertikale Richtung nach oben hin begrenzenden Abschnitt einer Förderseite (56) der Förderbandes ausgebildet wird.

2. Trennvorrichtung nach Anspruch 1, **dadurch gekennzeichnet, dass** der Leitabschnitt (24) sich bis zum Trennbereich (12) erstreckt.

3. Trennvorrichtung nach einem der vorhergehenden Ansprüche, **dadurch gekennzeichnet, dass** das Förderband als Plattenband mit einer Mehrzahl an in Förderrichtung (14) aneinander anliegenden Förderbandplatten ausgebildet ist.

4. Trennvorrichtung nach einem der vorherigen Ansprüche, **dadurch gekennzeichnet, dass** der Leitabschnitt (24) in die Fluidstromrichtung (22) eine Länge von mindestens 20 cm, insbesondere mindestens 40 cm hat.

5. Trennvorrichtung nach einem der vorherigen Ansprüche, **dadurch gekennzeichnet, dass** der Leitabschnitt (24) eine zur Fluidstromrichtung (22) orthogonale Breite von zumindest 80 %, insbesondere zumindest 90 % der Breite des Förderelementes (10) hat.

6. Trennvorrichtung nach einem der vorherigen Ansprüche, **dadurch gekennzeichnet, dass** der Leitabschnitt (24) relativ zu einer Horizontalen zumindest teilweise eine Steigung von höchstens 60°, insbesondere höchstens 30° aufweist.

7. Trennvorrichtung nach einem der vorherigen Ansprüche, **gekennzeichnet durch** zumindest eine relativ zum Fluidstromerzeuger (16) ortsfest und dicht am Förderelement (10) angeordnete und vorzugsweise den Leitabschnitt (24) in der Fluidstromrichtung (22) begrenzende Abstreiflippe (30).

8. Trennvorrichtung nach einem der vorherigen Ansprüche, **gekennzeichnet durch** zumindest eine den Leitabschnitt (24) zu einem weiteren Teil der Leiteinrichtung (18) hin abdichtende und relativ zum Fluidstromerzeuger (16) ortsfest und dicht am Förderelement (10) angeordnete Dichtlippe (32).

9. Trennvorrichtung nach einem der vorherigen Ansprüche, **gekennzeichnet durch** zumindest ein einen den Leitabschnitt (24) mitausbildenden Förderbandabschnitt (34) führendes Führungselement (36).

10. Trennvorrichtung nach Anspruch 9, **dadurch gekennzeichnet, dass** zumindest eines von mehreren Führungselementen (36) als zumindest auf der vom Fluidstrom abgewandten Seite des Förderbandabschnittes (34) angeordnete Aufdrückrolle (38) ausgebildet ist.

11. Trennvorrichtung nach Anspruch 9 oder 10, **dadurch gekennzeichnet, dass** zumindest eines der mehreren Führungselemente (36) als zumindest auf der dem Fluidstrom zugewandten Seite des Förderbandabschnittes (34) angeordnete Positionsrolle (40) ausgebildet ist.

12. Trennvorrichtung nach einem der Ansprüche 11 bis 13, **dadurch gekennzeichnet, dass** zumindest eines der mehreren Führungselemente (36) als zumindest an der dem Fluidstrom zugewandten Seite des Förderbandabschnittes (34) anliegendes und sich in Fluidstromrichtung (22), insbesondere über die gesamte Länge des Förderbandabschnittes (34), erstreckendes Gleitelement (42) ausgebildet ist.

13. Maschine (44) zum Ernten oder Überladen von Hackfrüchten (6), mit einer Aufnahmevorrichtung (46), insbesondere zur Aufnahme von Hackfrüchten (6) aus der Erde, **gekennzeichnet durch** eine Trennvorrichtung (2) nach einem der vorhergehenden Ansprüche.

## Claims

1. A separation device (2) for separating a crop mixture (4) from root crops (6) and admixtures (8), comprising at least one conveyor element (10) circulating during operation and designed as a conveyor belt at least for feeding the crop mixture (4) to a separation area (12) or for discharging the root crops (6) from the separation area (12) in a conveying direction (14), as well as at least one fluid-flow generator (16), and at least one guiding device (18) for guiding a fluid flow in a direction of the fluid flow (22) to the separation area (12), wherein the guiding device (18) is formed in at least one guide section (24) by the conveying element (10), **characterized in that** the conveying element (10) is designed as a substantially fluid-impermeable conveyor belt and the guide section (24) is formed by a section of a conveying side (56) of the conveyor belt, which delimits the fluid flow upward in a vertical direction.

2. The separation device according to claim 1, **characterized in that** the guide section (24) extends to the separation area (12).

3. The separation device according to any of the preceding claims, **characterized in that** the conveyor belt is designed as a plate belt having a plurality of conveyor-belt plates abutting one another in the conveying direction (14).

4. The separation device according to any of the preceding claims, **characterized in that** the guide section (24) has a length of at least 20 cm, in particular at least 40 cm, in the direction of fluid flow (22).

5. The separation device according to any of the preceding claims, **characterized in that** the guide section (24) has a width, which is orthogonal to the direction of fluid flow (22) of at least 80%, in particular at least 90% of the width of the conveying element (10).

6. The separation device according to any of the preceding claims, **characterized in that** the guide section (24) has an at least partial maximum gradient of 60°, in particular a maximum of 30°, relative to a horizontal plane.

7. The separation device according to any of the previous claims, **characterized in that** at least one wiper lip (30) is arranged in a stationary manner relative to the fluid flow generator (16) and is adjacent to the conveying element (10), and preferably delimiting the guide section (24) in the direction of fluid flow (22).

8. The separating device according to any of the preceding claims, **characterized in that** at least one sealing lip (32) is sealing the guide section (24) against a further part of the guiding device (18) and is arranged in a stationary manner relative to the fluid flow generator (16) and adjacent to the conveying element (10).

9. A separating device according to any of the preceding claims, **characterized in that** at least one guide element (36) is guiding a conveyor belt section (34), which also forms the guide section (24) .

10. The separating device according to claim 9, **characterized in that** at least one of several guide elements (36) is designed as a press-on roller (38) arranged at least on the side of the conveyor belt section (34) facing away from the fluid flow.

11. The separating device according to claim 9 or 10, **characterized in that** at least one of the several guide elements (36) is designed as a position roller (40) arranged at least on the side of the conveyor belt section (34) facing the fluid flow.

12. The separating device according to any of claims 11 to 13, **characterized in that** at least one of the several guide elements (36) is designed as a sliding element (42) abutting at least the side of the conveyor belt section (34), which faces the fluid flow, and extending in the fluid flow direction (22), in particular over the whole length of the conveyor belt section (34).

13. A machine (44) for harvesting or covering root crops (6), with a pick-up device (46), in particular for harvesting root crops (6) from the soil, **characterized by** a separation device (2) according to any of the preceding claims.

## Revendications

1. Dispositif de séparation (2) pour la séparation d'un mélange de récolte (4) de plantes sarclées (6) et de débris (8), comprenant au moins un élément de transport (10) rotatif en fonctionnement et réalisé en tant que bande transporteuse au moins pour l'amenée du mélange de récolte (4) vers une zone de séparation (12) ou pour l'évacuation des plantes sarclées (6) de la zone de séparation (12) dans un sens de transport (14), ainsi qu'au moins un générateur de courant de fluide (16) et au moins un dispositif de conduite (18) pour la conduite d'un courant de fluide dans un sens de courant de fluide (22)vers la zone de séparation (12), dans lequel le dispositif de conduite (18) est au moins formé dans au moins une section de conduite (24) par l'élément de transport (10), **caractérisé en ce que** l'élément de transport (10) est réalisé en tant que bande transporteuse sensiblement imperméable au fluide et la section de conduite (24) est formée par une section délimitant le courant de fluide dans une direction verticale vers le haut d'un côté de transport (56) de la bande transporteuse.

2. Dispositif de séparation selon la revendication 1, **caractérisé en ce que** la section de conduite (24) s'étend jusqu'à la zone de séparation (12).

3. Dispositif de séparation selon l'une quelconque des revendications précédentes, **caractérisé en ce que** la bande transporteuse est réalisée en tant que bande à plaques avec une pluralité de plaques de bande transporteuse adjacentes dans le sens de transport (14).

4. Dispositif de séparation selon l'une quelconque des revendications précédentes, **caractérisé en ce que** la section de conduite (24) a dans le sens de courant de fluide (22)une longueur d'au moins 20 cm, en particulier d'au moins 40 cm.

5. Dispositif de séparation selon l'une quelconque des revendications précédentes, **caractérisé en ce que** la section de conduite (24) a une largeur orthogonale au sens de courant de fluide (22)d'au moins 80 %, en particulier d'au moins 90 % de la largeur de l'élément de transport (10).

6. Dispositif de séparation selon l'une quelconque des revendications précédentes, **caractérisé en ce que** la section de conduite (24) présente par rapport à une horizontale au moins en partie une pente de maximum 60°, en particulier de maximum 30°.

7. Dispositif de séparation selon l'une quelconque des revendications précédentes, **caractérisé par** au moins une lèvre de raclage (30) agencée par rapport au générateur de courant de fluide (16) de manière fixe et de manière étanche sur l'élément de transport (10) et délimitant de préférence la section de conduite (24) dans le sens de courant de fluide (22).

8. Dispositif de séparation selon l'une quelconque des revendications précédentes, **caractérisé par** au moins une lèvre d'étanchéité (32) étanchant la section de conduite (24) par rapport à une autre partie du dispositif de conduite (18) et agencée par rapport au générateur de courant de fluide (16) de manière fixe et de manière étanche sur l'élément de transport (10).

9. Dispositif de séparation selon l'une quelconque des revendications précédentes, **caractérisé par** au moins un élément de guidage (36) guidant une section de bande transporteuse (34) formant la section de conduite (24)

10. Dispositif de séparation selon la revendication 9, **caractérisé en ce qu'**au moins un de plusieurs éléments de guidage (36) est réalisé en tant que rouleau de pression (38) agencé au moins sur le côté opposé au courant de fluide de la section de bande transporteuse (34).

11. Dispositif de séparation selon la revendication 9 ou 10, **caractérisé en ce qu'**au moins un des plusieurs éléments de guidage (36) est réalisé en tant que rouleau de position (40) agencé au moins sur le côté tourné vers le courant de fluide de la section de bande transporteuse (34).

12. Dispositif de séparation selon l'une quelconque des revendications 11 à 13, **caractérisé en ce qu'**au moins un des plusieurs éléments de guidage (36) est réalisé en tant qu'élément coulissant (42) s'appuyant au moins sur le côté tourné vers le courant de fluide de la section de bande transporteuse (34) et s'étendant dans le sens de courant de fluide (22), en particulier sur toute la longueur de la section de bande transporteuse (34) .

13. Machine (44) de récolte ou de surcharge de plantes sarclées (6), avec un dispositif de réception (46), en particulier pour la réception de plantes sarclées (6) de la terre, **caractérisée par** un dispositif de séparation (2) selon l'une quelconque des revendications précédentes.
